# FASCICULE DE BREVET EUROPEEN

(11) **EP 2 029 879 B1**
(45) Date de publication et mention de la délivrance du brevet: **10.08.2016**
(21) Numéro de dépôt: 07789000.2
(22) Date de dépôt: 13.06.2007
(51) Int. Cl.: F02K 1/44, F02K 1/48, F02K 1/38

(54) **Ensemble propulseur d'aéronef et aéronef associé**
Flugzeugantriebseinheit und zugehöriges Flugzeug
Aircraft propulsion unit and corresponding aircraft

(30) Priorité: 21.06.2006 FR 0605546
(43) Date de publication de la demande: 04.03.2009
(73) Titulaire: Airbus Opérations SAS, 31060 Toulouse (FR)
(72) Inventeur: DRUON, Yann, 31300 Toulouse (FR); CHELIN, Frédéric, 32430 Encausse (FR); GANTIE, Fabrice, 31000 Toulouse (FR)
(74) Mandataire: Fantin, Laurent
(86) Numéro de dépôt international: PCT/FR2007/051434
(87) Numéro de publication internationale: WO 2007/148001

(56) Documents cités:
- EP-A1- 1 493 912
- WO-A-00/53915
- GB-A- 1 019 857
- GB-A- 2 160 265
- GB-A- 2 242 236
- US-A- 2 665 083
- US-A1- 2004 140 397
- US-A1- 2005 223 691

## Description

La présente invention se rapporte à un ensemble propulsif d'aéronef comportant un conduit d'éjection avec un bord de fuite échancré.

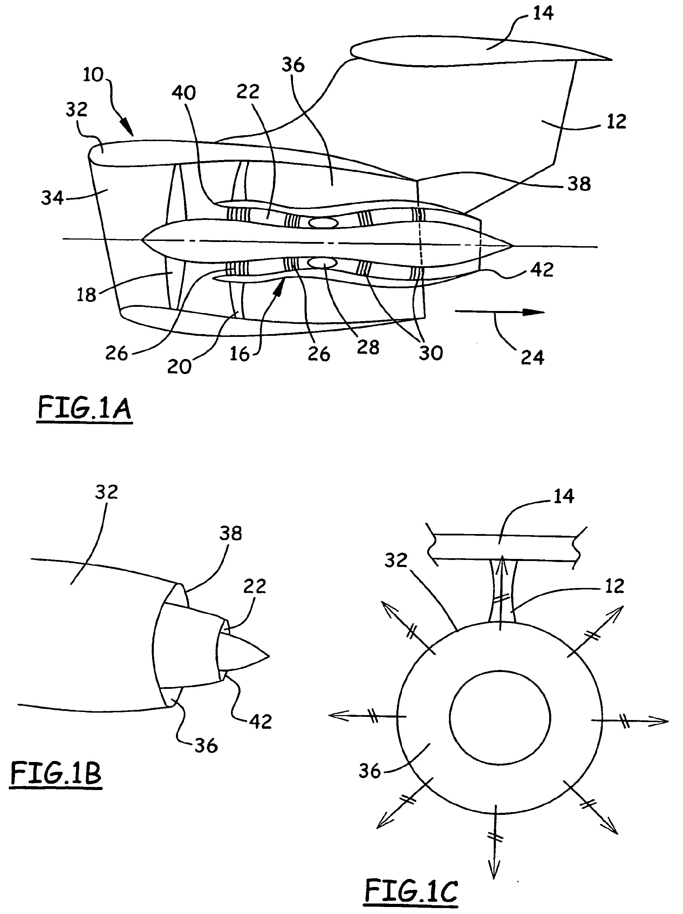

Sur la figure 1A, on a représenté en 10 un ensemble propulsif d'aéronef, également appelé turboréacteur, relié grâce à des moyens de liaison à un aéronef, notamment grâce à un mât 12 sous la voilure 14. Il comprend un moteur 16 avec d'une part une soufflante comportant un rotor 18 muni de pales et un stator 20 muni d'aubes, et d'autre part, un conduit primaire 22 dans lequel sont disposés selon le sens d'écoulement de l'air 24, des étages de compresseurs 26, une chambre de combustion 28 et des étages de turbines 30. Le moteur 16 est disposé dans une nacelle 32 qui comprend en amont de la soufflante une entrée d'air 34 et en aval du stator de la soufflante un conduit secondaire 36.

Le conduit secondaire 36 comprend en aval un bord de fuite 38 dit secondaire délimitant une sortie d'air.

De la même façon, le conduit primaire 22 comprend un bord d'attaque 40 dit primaire délimitant l'entrée d'air en amont des étages de compresseurs 26 et un bord de fuite 42 dit primaire délimitant la sortie des gaz d'échappement en aval des étages de turbines 30.

Les bords de fuite primaire 42 et secondaire 38 sont disposés chacun dans un plan sensiblement vertical.

En fonction des motorisations, le conduit primaire 22 peut s'étendre au-delà du bord de fuite secondaire 38, à l'arrière de la nacelle 32.

Le bruit émis par l'ensemble propulsif 10 se compose d'une part du bruit de jet, produit à l'extérieur des conduits suite au mélange des différents écoulements, et d'autre part, du bruit des parties internes, dit bruit interne, produit par la soufflante, les compresseurs, les turbines et la combustion qui se propage à l'intérieur des conduits.

Pour limiter l'impact des nuisances sonores à proximité des aéroports, les normes internationales sont de plus en plus contraignantes en matière d'émissions sonores.

Des techniques ont été développées pour réduire le bruit interne, notamment en disposant, au niveau des parois des conduits, des revêtements visant à absorber une partie de l'énergie sonore, notamment en utilisant le principe des résonateurs d'Helmholtz.

Cependant, le bruit interne constitué principalement du bruit de la soufflante dont une large part se propage dans le conduit secondaire et rayonne en sortie de conduit, demeure une source prépondérante de bruit, malgré l'utilisation des revêtements acoustiques.

Aussi, pour limiter le rayonnement acoustique des conduits d'éjection, une première solution consiste à prévoir un conduit secondaire 36 se terminant en biseau de façon à orienter l'émission du bruit vers le haut et donc à limiter le rayonnement vers le sol. Selon cette solution, le bord de fuite secondaire 38 est disposé dans un plan incliné, la partie sommitale du conduit étant décalée vers l'amont par rapport à la partie basse.

Ce mode de réalisation est notamment décrit dans le document US2004/0140397 qui traite plus particulièrement des problèmes aérodynamiques. Selon certains modes de réalisation décrits, le conduit d'éjection comprend deux parties, une partie principale fixe et une partie terminale en biseau susceptible de pivoter autour de l'axe du conduit par rapport à la partie fixe de manière à orienter le flux d'air éjecté en fonction de la trajectoire souhaitée. Selon certaines positions, le flux d'air peut être éjecté vers un côté.

Même si ce document évoque une réduction du bruit en orientant le flux d'air vers le haut, cette solution n'est pas satisfaisante pour les raisons suivantes:
L'orientation du flux d'air par une forme terminale en biseau (bord de fuite disposé dans un plan) n'est pas optimale car le rayonnement est orienté vers une zone de l'espace trop importante correspondant à un demi espace. Aussi même lorsque le flux est orienté vers le côté, une partie non négligeable du bruit est orientée vers le sol.

Lorsque l'ensemble propulsif est disposé sous la voilure (montage le plus fréquent), si le flux d'air est éjecté vers le haut, il est réfléchi vers le sol par la voilure. Cette solution accentue le problème puisque le rayonnement acoustique orienté de façon privilégiée vers le haut est réfléchi par la voilure vers le sol. Pour limiter l'influence de la réflexion de la voilure en direction du sol, une solution décrite dans le document EP-1.493.665 prévoit un profil particulier de la surface inférieure de la voilure afin que les ondes acoustiques soient réfléchies de manière préférentielle en direction du jet chaud sortant du conduit primaire. Ainsi, les écoulements turbulents et instationnaires du jet chaud sont susceptibles de disperser une partie de l'énergie acoustique.

Néanmoins, cette solution n'est pas satisfaisante car elle est généralement coûteuse, et impose une contrainte supplémentaire au profil de la voilure susceptible d'être antinomique avec les contraintes principales à savoir la résistance mécanique et les contraintes aérodynamiques telles que la portance ou la traînée.

Le document US2005/223691 traite également de la réduction du bruit perçu au sol et émis par un ensemble propulsif d'un aéronef, et propose un agencement dans lequel la partie terminale du conduit d'éjection comprend des échancrures dont la forme non linéaire ou courbée limite le rayonnement acoustique. Toutefois cette solution ne permet pas une réduction optimale du bruit perçu au sol.

Aussi, la présente invention vise à pallier les inconvénients de l'art antérieur en proposant une forme de conduit d'éjection de conception simple et efficace, permettant de limiter le bruit interne du moteur, notamment le bruit de soufflante, le bruit de turbine et le bruit de combustion.

A cet effet, l'invention a pour objet un ensemble propulsif d'aéronef comprenant au moins un conduit d'éjection comportant une sortie d'air délimitée par un bord de fuite, la partie terminale du conduit d'éjection comprenant deux échancrures sur les côtés gauche et droit du conduit correspondant chacune à une direction de rayonnement acoustique privilégiée, séparées par deux parties avancées basse et haute disposées dans un plan et susceptibles de limiter le rayonnement acoustique selon les directions verticales, vers le bas et le haut, caractérisé en ce que lesdites échancrures sont décalées par rapport au plan médian horizontal vers le haut.

Ainsi, les échancrures sont disposées de manière à ne pas orienter le rayonnement acoustique vers le bas ou en direction d'une partie de l'aéronef susceptible de le réfléchir en direction du sol.

D'autres caractéristiques et avantages ressortiront de la description qui va suivre de l'invention, description donnée à titre d'exemple uniquement, en regard des dessins annexés sur lesquels :
- la figure 1A est une coupe longitudinale selon un plan vertical d'un ensemble propulsif selon l'art antérieur,
- la figure 1B est une vue en perspective de l'arrière de l'ensemble propulsif de la figure 1A,
- la figure 1C est une vue de l'arrière de l'ensemble propulsif de la figure 1A indiquant l'orientation du rayonnement acoustique,
- la figure 2A est une coupe longitudinale selon un plan vertical d'un ensemble propulsif,
- la figure 3A est une vue latérale d'un ensemble propulsif selon l'invention,
- la figure 3B est une vue arrière de l'ensemble propulsif de la figure 3A indiquant l'orientation du rayonnement acoustique.

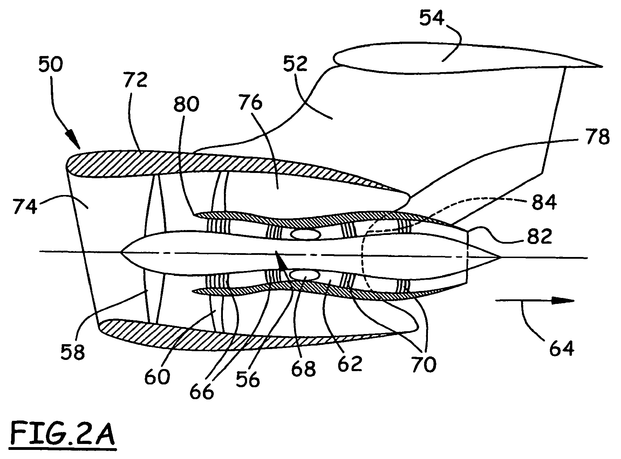

Sur la figure 2A, on a représenté en 50 un ensemble propulsif d'aéronef, également appelé turboréacteur, relié grâce à des moyens de liaison à un aéronef, notamment grâce à un mât 52 sous la voilure 54 de l'aéronef. Cependant l'invention n'est pas limitée à cette implantation, l'ensemble propulsif pouvant être relié à une autre partie de l'aéronef par le biais de moyens de liaison différents.

Selon un mode de réalisation, l'ensemble propulsif 50 comprend d'une part, un moteur 56 avec d'une part une soufflante comportant un rotor 58 muni de pales et un stator 60 muni d'aubes, et d'autre part, un conduit primaire 62 dans lequel sont disposés selon le sens d'écoulement de l'air 64, des étages de compresseurs 66, une chambre de combustion 68 et des étages de turbines 70. Le moteur 56 est disposé dans une nacelle 72 qui comprend une entrée d'air 74 en amont de la soufflante et un conduit secondaire 76 en aval du stator 60 de la soufflante.

Le conduit secondaire 76 comprend en aval un bord de fuite 78 dit secondaire délimitant une sortie d'air.

Le conduit primaire 62 comprend un bord d'attaque 80 dit primaire délimitant l'entrée d'air en amont des étages de compresseurs 66 et un bord de fuite 82 dit primaire délimitant la sortie des gaz d'échappement en aval des étages de turbines 70.

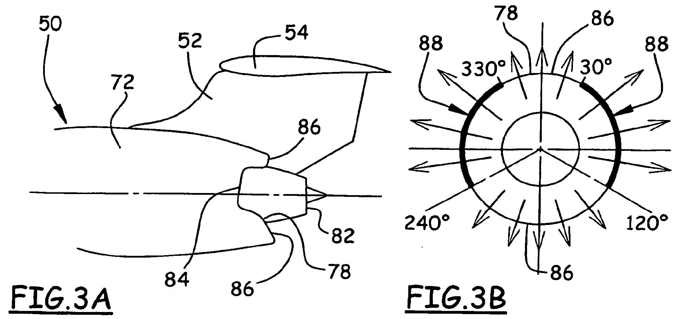

En fonction des motorisations, le conduit primaire 62 peut s'étendre au-delà du bord de fuite secondaire 78, à l'arrière de la nacelle 72, comme illustré sur les figures 2A et 3A, ou ne pas dépasser le bord de fuite secondaire 78. L'interaction de l'écoulement d'air avec la soufflante produit un bruit appelé bruit de soufflante qui se propage ensuite dans le conduit d'éjection secondaire, mais également dans l'entrée d'air, et qui rayonne ensuite dans toutes les directions en sortie dudit conduit selon l'art antérieur.

De la même manière, l'interaction de l'écoulement avec les étages de turbines produit un bruit qui se propage dans le conduit d'éjection primaire et rayonne en sortie dans toutes les directions selon l'art antérieur.

L'invention vise plus particulièrement à réduire la perception au sol du bruit du moteur, notamment le bruit de soufflante, le bruit de turbine, le bruit de combustion, émis par un ensemble propulsif comportant au moins un conduit d'éjection.

Elle est décrite appliquée au conduit secondaire 76 mais peut aussi bien s'appliquer au conduit primaire 62.

Selon l'invention, la partie terminale du conduit d'éjection 76 comprend deux échancrures 84 correspondant chacune à une direction de rayonnement acoustique privilégiée, séparées par des parties avancées 86 susceptibles de limiter le rayonnement acoustique, lesdites échancrures 84 étant décalées par rapport au plan médian horizontal vers le haut.

Cette solution permet d'obtenir un bord de fuite 78 qui ne soit pas disposé dans un plan, chaque échancrure correspondant à une direction de rayonnement acoustique privilégiée.

Contrairement à une découpe en biseau du conduit, les échancrures permettent de mieux canaliser le rayonnement acoustique selon au moins une zone de l'espace plus restreinte qu'un demi espace.

Par échancrure, on entend une découpe dans la partie terminale du conduit correspondant à la ligne d'intersection entre la surface définissant le conduit et une surface non plane.

Lorsque l'ensemble propulsif 50 est disposé sous la voilure, le bord de fuite 78 comprend deux parties avancées basse et haute 86 disposées dans un plan et deux portions échancrées 84 sur les côtés gauche et droit du conduit. Ainsi, le conduit d'éjection comprend deux "ouvertures" 88 sur les côtés favorisant un rayonnement latéral. En complément, les parties avancées 86 permettent de masquer en partie le rayonnement selon les directions verticales, vers le bas et le haut.

Selon l'invention, comme illustré sur les figures 3A et 3B, les portions échancrées 84 sont décalées vers le haut par rapport au plan médian horizontal, de manière à s'étendre, comme illustré sur la figure 3B, pour la première échancrure sur un secteur angulaire mesuré depuis le sommet du bord de fuite sur le plan médian vertical allant approximativement de 30° à 120° et pour la seconde échancrure de 240° à 330°. Les valeurs angulaires indiquées ne sont aucunement limitatives. Les positions des portions échancrées 84 sont déterminées afin d'assurer une réduction du rayonnement acoustique en direction du sol mais également en direction du point de certification dit latéral situé dans un plan à 56° du plan vertical.

Dans cette configuration, la partie avancée haute est plus petite que la partie avancée basse. Néanmoins, cette partie avancée haute n'est pas nulle et s'étend sur un angle de l'ordre de 60° afin de limiter le rayonnement vers la voilure pour limiter la réflexion des ondes acoustiques.

Avantageusement, les échancrures sont disposées de manière sensiblement symétrique par rapport à un plan médian vertical.

L'invention comprend plusieurs échancrures afin de définir des directions privilégiées de rayonnement acoustique, une pour chaque échancrure.

Ainsi, les échancrures sont disposées de manière à ne pas orienter le rayonnement acoustique vers le bas ou en direction d'une partie de l'aéronef susceptible de le réfléchir en direction du sol.

Comme indiqué précédemment, dans le cas d'un ensemble propulsif 50 à nacelle courte, l'invention peut s'appliquer aux conduits d'éjection primaire 62 et/ou secondaire 76. Dans le cas d'une nacelle longue, la réalisation des échancrures 84 selon l'invention ne présente un intérêt qu'au niveau du conduit secondaire 76.

Différentes dispositions et formes sont envisageables pour les échancrures. Les échancrures peuvent ne pas être symétriques selon un plan médian vertical. De même, la partie avancée basse peut être plus longue que la partie avancée haute ou vice versa.

Selon les variantes, les échancrures 84 peuvent avoir différentes formes. Ainsi, elles peuvent avoir une forme en arc de cercle, ou avoir une forme avec des chevrons, ou être constituées d'une succession de lignes courbes. Enfin, comme illustré sur la figure 3A, les échancrures peuvent comprendre des portions courbes et des portions sensiblement rectilignes.

La forme précise des échancrures est adaptée en fonction de chaque couple ensemble propulsif/aéronef. Ainsi, la profondeur de l'échancrure, la distance angulaire sur laquelle s'étendent les échancrures ainsi que la position angulaire des échancrures sont ajustées de manière à obtenir le meilleur compromis entre le gain acoustique perçu au sol et les performances de l'ensemble propulsif et de l'aéronef, notamment en matière de poussée et d'aérodynamisme.

## Revendications

1. Ensemble propulsif d'aéronef comprenant au moins un conduit d'éjection (62, 76) comportant une sortie d'air délimitée par un bord de fuite (78, 82), la partie terminale du conduit d'éjection (62, 76) comprenant deux échancrures (84) sur les côtés gauche et droit du conduit correspondant chacune à une direction de rayonnement acoustique privilégiée, séparées par deux parties avancées basse et haute (86) disposées dans un plan et susceptibles de limiter le rayonnement acoustique selon les directions verticales, vers le bas et le haut, **caractérisé en ce que** lesdites échancrures sont décalées par rapport au plan médian horizontal vers le haut.

2. Ensemble propulsif d'aéronef selon la revendication 1, **caractérisé en ce que** les échancrures (84) sont disposées de manière symétrique par rapport à un plan médian vertical.

3. Ensemble propulsif d'aéronef selon la revendication 2, **caractérisé en ce qu'**une première échancrure s'étend sur un secteur angulaire mesuré depuis le sommet du bord de fuite (78,82) sur le plan médian vertical allant approximativement de 30° à 120° et **en ce que** la seconde échancrure s'étend sur un secteur angulaire allant approximativement de 240° à 330°.

4. Ensemble propulsif d'aéronef selon l'une quelconque des revendications 1 à 3 comprenant d'une part, un moteur (56) comportant une soufflante (58) et un conduit primaire (62) et d'autre part, une nacelle (72) délimitant un conduit secondaire (76) comportant en aval, selon les sens d'écoulement d'air, un bord de fuite (78) délimitant une sortie d'air, **caractérisé en ce que** la partie terminale du conduit secondaire (76) comprend deux échancrures (84) sur les côtés gauche et droit du conduit correspondant chacune à une direction de rayonnement acoustique privilégiée, séparées par deux parties avancées basse et haute (86) disposées dans un plan et susceptibles de limiter le rayonnement acoustique selon les directions verticales, vers le bas et le haut, lesdites échancrures étant décalées par rapport au plan médian horizontal vers le haut.

5. Ensemble propulsif d'aéronef selon la revendication 4, **caractérisé en ce que** les échancrures (84) sont disposées de manière symétrique par rapport à un plan médian vertical.

6. Ensemble propulsif d'aéronef selon la revendication 5, **caractérisé en ce qu'**une première échancrure s'étend sur un secteur angulaire allant approximativement de 30° à 120° et **en ce que** la seconde échancrure s'étend sur un secteur angulaire allant approximativement de 240° à 330°.

7. Aéronef comportant au moins un ensemble propulsif selon l'une quelconque des revendications précédentes.

## Patentansprüche

1. Antriebseinheit eines Luftfahrzeugs mit wenigstens einem Ausstoßkanal (62, 76), der einen durch eine Hinterkante (78, 82) begrenzten Luftauslass aufweist, wobei der hintere Bereich des Ausstoßkanals (62, 76) zwei Aussparungen (84) auf der linken und rechten Seite des Kanals aufweist, die jeweils einer bevorzugten akustischen Abstrahlrichtung entsprechen und die unten und oben durch zwei vorspringende Bereiche (86) getrennt sind, die in einer Ebene angeordnet sind und dazu geeignet sind, die akustische Abstrahlung nach unten und nach oben in vertikale Richtung zu begrenzen, **dadurch gekennzeichnet, dass** die Aussparungen bezüglich einer horizontalen mittleren Ebene nach oben versetzt sind.

2. Antriebseinheit eines Luftfahrzeugs nach Anspruch 1, **dadurch gekennzeichnet, dass** die Aussparungen(84) bezüglich einer vertikalen mittleren Ebene symmetrisch angeordnet sind.

3. Antriebseinheit eines Luftfahrzeugs nach Anspruch 2, **dadurch gekennzeichnet, dass** sich eine erste Aussparung über einen von einem Scheitelpunkt der Hinterkante (78, 82) auf einer vertikalen mittleren Ebene aus gemessenen Winkelbereich erstreckt, der ungefähr von 30° bis 120° läuft, und dass sich die zweite Aussparung über einen Winkelbereich erstreckt, der ungefähr von 240° bis 330° läuft.

4. Antriebseinheit eines Luftfahrzeugs nach einem der Ansprüche 1 bis 3, die einerseits einen Motor (56) mit einem Gebläse (58) und einem primären Kanal (62) und andererseits eine Gondel (72) aufweist, die einen sekundären Kanal (76) begrenzt, der bezüglich der Strömungsrichtung der Luft stromabwärts eine Hinterkante (78) aufweist, die einen Luftauslass begrenzt, **dadurch gekennzeichnet, dass** der hintere Bereich des sekundären Kanals (76) zwei Aussparungen (84) auf der linken und rechten Seite des Kanals aufweist, die jeweils einer bevorzugten akustischen Abstrahlrichtung entsprechen und unten und oben durch zwei Bereiche (86) begrenzt sind, die in einer Ebene angeordnet sind und dazu geeignet sind, die akustische Abstrahlung nach unten und nach oben in vertikale Richtung zu begrenzen, wobei die Aussparungen bezüglich einer horizontalen mittleren Ebene versetzt sind.

5. Antriebseinheit eines Luftfahrzeugs nach Anspruch 4, **dadurch gekennzeichnet, dass** die Aussparungen (84) bezüglich einer vertikalen mittleren Ebene symmetrisch angeordnet sind.

6. Antriebseinheit eines Luftfahrzeugs nach Anspruch 5, **dadurch gekennzeichnet, dass** sich eine erste Aussparung über einen Winkelbereich erstreckt, der ungefähr von 30° bis 120° läuft, und dass sich die zweite Aussparung über einen Winkelbereich erstreckt, der ungefähr von 240° bis 330° läuft.

7. Luftfahrzeug mit wenigstens einer Antriebseinheit nach einem der vorhergehenden Ansprüche.

## Claims

1. Propulsion unit that comprises at least one exhaust pipe (62, 76) that comprises an air discharge that is delimited by a trailing edge (78, 82), the end part of the exhaust pipe (62, 76) comprises two scalloped shapes (84) on the left and right sides that each correspond to a preferred acoustic radiation direction, separated by two above and below advanced parts (86) arranged in a plane and that can limit the acoustic radiation in the vertical directions, downward and upward, **characterized in that** the scalloped shapes are offset upward relative to the horizontal median plane.

2. Propulsion unit according to claim 1, wherein the scalloped shapes (84) are arranged symmetrically relative to a vertical median plane.

3. Propulsion unit according to claim 2, wherein a first scalloping shape extends over an angular sector measured from the top of the trailing edge of the vertical median plane that ranges from approximately 30° to 120° and wherein the second scalloping extends over an angular sector that ranges approximately from 240° to 330°.

4. Propulsion unit according to any of claims 1 to 3, that comprises, on the one hand, an engine (56) that comprises a fan (58) and a primary pipe (62), and, on the other hand, a nacelle (72) that delimits a secondary pipe (76) that comprises downstream, according to the directions of air flow, a trailing edge (78) that delimits an air discharge, **characterized in that** the terminal part of the secondary pipe (76) comprises two scalloped shapes (84) on the left and right sides that each correspond to a preferred acoustic radiation direction, separated by two above and below advanced parts (86) arranged in a plane and that can limit the acoustic radiation in the vertical directions, downward and upward, said scalloped shapes being offset upward relative to the horizontal median plane.

5. Propulsion unit according to claim 4, wherein the scalloped shapes (84) are arranged symmetrically relative to a vertical median plane.

6. Propulsion unit according to claim 5, wherein a first scalloping extends over an angular sector that ranges approximately from 30° to 120° and wherein the second scalloping extends over an angular sector that ranges approximately from 240° to 330°.

7. Aircraft that comprises at least one propulsion unit according to any of the preceding claims.
